Europäisches Patentamt

(19) European Patent Office

Office européen des brevets

(11) Publication number: **0 145 218**
**B1**

(12) **EUROPEAN PATENT SPECIFICATION**

(45) Date of publication of patent specification: **07.01.88**

(21) Application number: **84307447.7**

(22) Date of filing: **29.10.84**

(51) Int. Cl.⁴: **A 01 D 34/84, A 01 G 3/06**

(54) **Improvements in or relating to lawn maintenance equipment.**

(30) Priority: **08.11.83 GB 8329778**

(43) Date of publication of application:
**19.06.85 Bulletin 85/25**

(45) Publication of the grant of the patent:
**07.01.88 Bulletin 88/01**

(84) Designated Contracting States:
**BE DE FR IT NL**

(56) References cited:
**DE-B-2 246 232**
**US-A-2 975 257**
**US-A-3 086 596**

(73) Proprietor: **Black & Decker Inc.**
**Drummond Plaza Office Park 1423 Kirkwood Highway**
**Newark Delaware 19711 (US)**

(72) Inventor: **Wilson, Michael**
**71 Heather Lane**
**Crook County Durham (GB)**

(74) Representative: **Pike, Harold John et al**
**Abel & Imray Northumberland House 303-306 High Holborn**
**London, WC1V 7LH (GB)**

Courier Press, Leamington Spa, England.

## Description

This invention relates to lawn maintenance equipment and has particular reference to a powered device for edging a lawn especially an electrically powdered lawn edger.

US Patent Specification No. 3,086,596 describes a lawn edger having a housing comprising a main cylindrical portion which is open at one end and at the other end is extended to house a cutter. An electric motor for rotating the cutter is contained within the housing and the open end of the housing is closed by a cover. The cover and the closed end of the main portion are each formed with a respective wheel mounting on which the hub of a wheel is rotatably mounted. The wheel and its hub are held in position on the mounting by a snap ring.

It is an object of the present invention to provide a lawn edger having a construction which enables manufacture and assembly to be simplified.

The present invention provides a lawn edger comprising a housing accommodating a drive motor for rotating a cutter positioned at one end of the housing, the housing being adapted, at each end, to provide a mounting for a hub member which rotatably mounts a ground wheel on the housing with the help of retaining means, which releasably engage the associated mounting to detachably secure the hub member to the mounting, characterized in that: the housing is of clam shell construction; the clam shell parts are so shaped that, at each end of the housing, the parts together form the mounting for the hub member; and each hub member is formed with the retaining means.

The retaining means may comprise at least one hooked tongue, the mounting having slots for the reception of the hooked tongue when the hub member is located on the mounting. The hub member may be adapted to provide access to the hooked tongue for the purpose of releasing the latter from engagement with the slots.

In one embodiment of the invention, that one of the hub mountings at the one end of the housing includes means for receiving and supporting a guard for the cutter.

The one hub mounting may comprise a cylindrical wall portion on which the ground wheel is rotatably mounted, the wall portion having circumferentially spaced flanges for receiving the guard in a 'keyway' arrangement.

One of the flanges may have a resilient tongue portion adapted to retain the guard once positioned in a guarding position on the hub member. In that case, the guard may have an opening giving access to the resilient tongue. The insertion of a tool through the opening by a user enables the tongue to be displaced to permit removal of the guard from the hub member.

By way of example only, an embodiment of the invention will now be described in greater detail with reference to the accompanying drawings of which:

Fig. 1 is a front elevation mainly in section of the lower part of the embodiment,

Fig. 2 is a front elevation of the upper part of the embodiment,

Fig. 3 is an end view of the part shown in Fig. 1,

Fig. 4 is an end view with certain components removed of the part shown in Fig. 2,

Fig. 5 is a side view of a component,

Fig. 6 is an end view of the component looking in the direction of arrow A in Fig. 5,

Fig. 7 is another side view of the component,

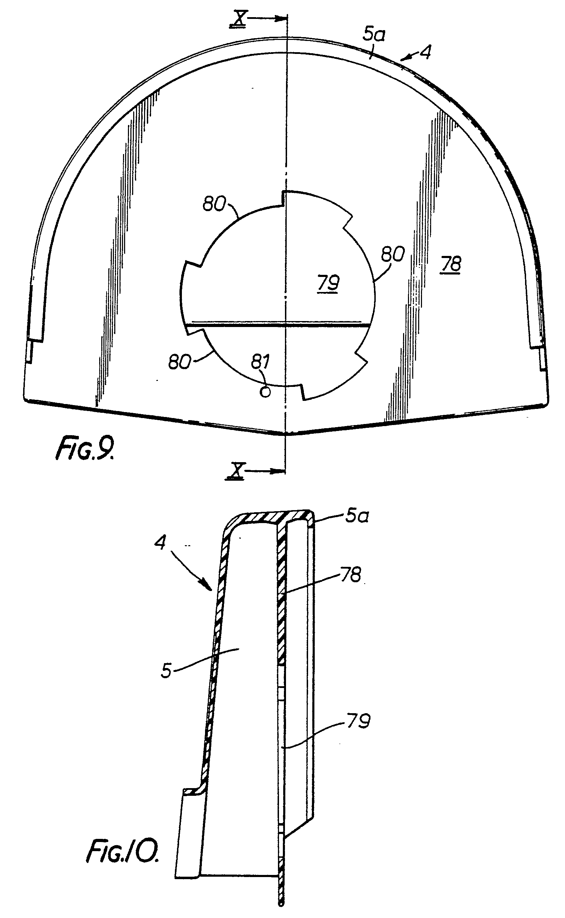

Fig. 8 is a section on the line VIII—VIII of Fig. 6,

Fig. 9 is a side elevation of another component, and,

Fig. 10 is a section on the line X—X of Fig. 9.

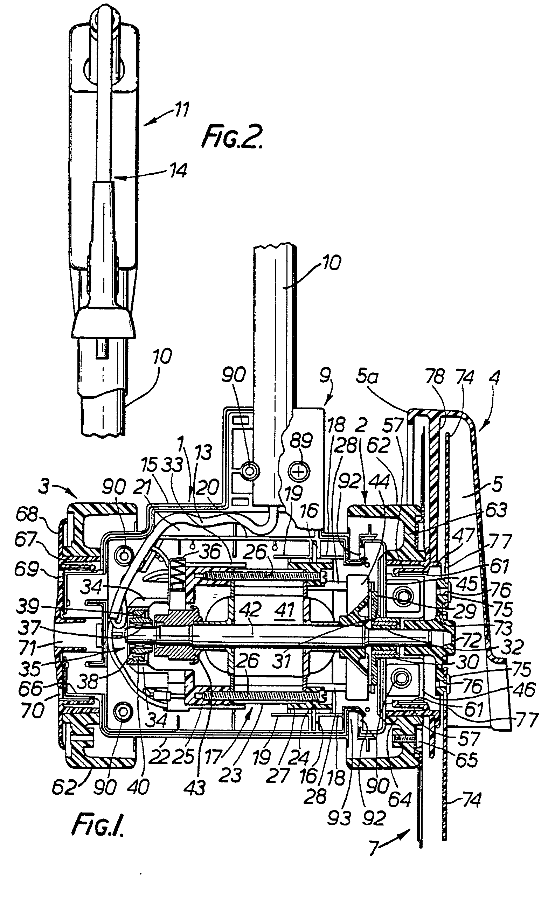

Fig. 1 shows in front view partly in section the lower part of the embodiment. The part comprises a substantially cylindrical housing 1 supporting ground wheels 2, 3 mounted at the ends of the housing 1. Detachably secured to the housing 1 at one end thereof is a guard 4 of approximately semi-circular shape when seen in end elevation as in Fig. 3. Inside the guard 4 in a compartment 5 thereof is a rotary cutter assembly 6 while a rotary guide 7, having radially extending fingers 8 as can be seen more clearly in Fig. 3, is mounted externally of the compartment 5 but guarded by an external lip 5a of the guard 4.

The housing 1 has an external socket 9 dimensioned to receive the lower end of a tubular shaft 10 carrying, at its upper end, a handle 11 by which a user manipulates and guides the embodiment. The handle 11 incorporates a lever 12 by means of which the user controls energisation of an electric motor accommodated within the housing 1 and described in more detail below. The motor is powered via an electric lead 13 extending within the shaft 10 from the housing 1 to the handle 11 and thence via a drop lead and connector 14 to a source of power.

The housing 1 is of 2-part clam-shell construction, each part being of a suitable plastics material and providing one-half of the housing. One part 15 is shown in Fig. 1 but the other part is similar. Part 15 has an internal rib 16 that locates one end of a motor unit 17, the rib 16 being extended axially of the part 15 as indicated at 18, 19 to support that one end of unit 17. Rib 16 stems from an internal axial partition 20 which forms one half of a dividing wall between a compartment in the housing 1 accommodating the motor unit 17 and a smaller compartment 21 adjacent the socket 9 which accommodates a length of the cord 13 which extends to the motor unit 17 via a gap at the left-hand end of the partition 20. Opposite to the socket 9, the part 15 has a flattened external surface 22.

The motor unit 17 has a stator assembly 23 incorporating the conventional laminated core and field windings. On the ends of the assembly 23 are seated end caps 24, 25 of electrically-insulating material that are held in place on the stator assembly by screws 26.

End cap 24 has an annulus 27 that seats on the adjacent end face of stator assembly 23 and has axially extending, circumferentially-spaced arms that support a bearing unit. There are four arms but only two, 28, are visible in Fig. 1. The bearing unit comprises a disc 29 and integral boss 30 which both incorporate a heat sink 31, a bearing sleeve 32 being housed in the boss 30 as shown.

End cap 25 also has an annulus 33 that seats on the other end of assembly 23 and has four radially-extending, circumferential spaced arms 34, two only of which are shown and which support, at their ends, a bearing unit 35 and between their ends and the annulus 33 two brush boxes, only one of which is shown in Fig. 1 and referenced 36. Bearing unit 35 incorporates a heat sink with an inner annulus 37 accommodating a bearing 38 and an outer annulus 39 joined by an apertured web 40 to the outer annulus.

The motor unit 17 also has an armature 41 whose shaft 42 carries a commutator 43 adjacent one end and a fan 44 adjacent the other end. The ends of the shaft 42 are supported in the bearing units as shown in Fig. 1.

At its right-hand end (as viewed in Fig. 1), part 1 has an end wall 45 with a semi-circular recess in which seats boss 30 of the bearing unit supported at the ends of arms 28. Extending externally from end wall 45 is a half-boss 46 whose outer surface is contoured to receive, in conjunction with a correspondingly shaped half-boss on the other half of the clam shell, a hub member 47. Seen in end elevation, the hub member 47 is substantially square.

The hub member 47 — Figs. 5, 6 and 7 — is of a suitable plastics material and includes a cylindrical wall portion 48 whose external curved surface has, adjacent one end, a series of flanges spaced circumferentially round that end. There are three flanges 49, 50 and 51 each of which has a main portion set back slightly from the one end and, a subsidiary portion of shorter length, at that end. Fig. 5 shows the main portion 52 and the subsidiary portion 53 of flange 49 and it can be seen that portions 52 and 53 are joined by an axial portion 54.

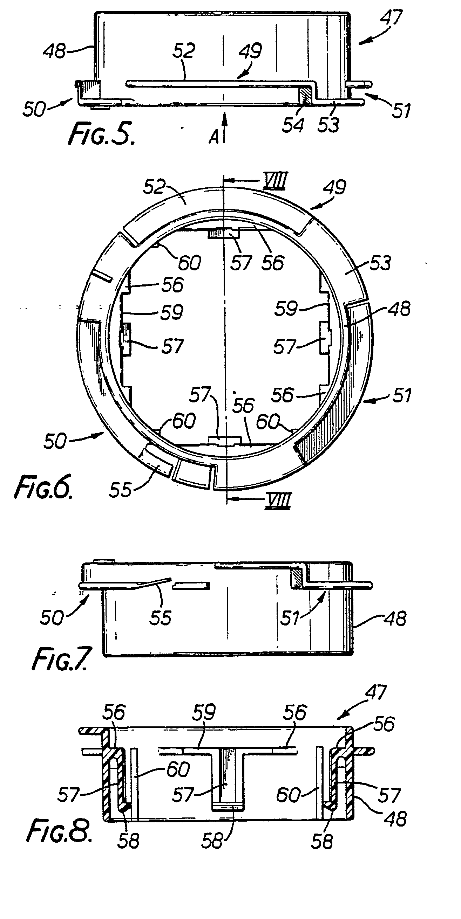

The main portion of flange 50 includes a resilient tongue 55 (Fig. 7) that is separated from the main portion except at the root of the tongue, and is set into an inclined position as shown.

Internally, the bore of portion 48 is formed with four inwardly projecting ledges 56 each of which has a central axially extending tongue 57 with a hook 58 at its free end. The facing edges of the ledges 56 are flat and lie along chords. The facing edges of the two ledges that are horizontally opposed (as seen in Fig. 6) are recessed centrally as indicated at 59. The bore also has three axial rails 60.

Although substantially square when seen in end elevation, boss 46 is contoured to fit into the space bounded by the facing edges of the ledges 56 and has "flats" that engage the recesses 59. Axial grooves 61 on the flat faces of the boss 46 engage the tongues 57, the hooks 58 of which engage slots (not shown) on the boss to retain the hub 47 in position thereon. The hooks 58 can be released from the slots to permit removal of the hub member 48 by means of a tool inserted through the open end of the hub member. To obtain access to the open end certain other components may have to be removed as will be apparent below.

Before being located on the boss 46, hub 47 is fitted with the wheel 2 of a plastics material and which has an integral wide tread 62 connected by a web 63 to an inner flange 64 that seats on the wall 48 of the hub 47 and abuts the main portions of the three flanges 49, 50, 51. Secured to the wheel 64 by means of screws that pass through the web 64 is the guide 7 which is a pressed metal component. One only of the screws is shown in Fig. 1 and is referenced 65. As can be seen from Fig. 1, the central part of the guide 7 is "dished" to fit the contour of the wheel 2.

The opposite end of the part 15 has an outwardly-extending half boss 66 generally similar to half-boss 46 which, with a mating half boss on the other clam shell part form a mounting for another hub 67 on which the wheel 3 is mounted.

Hub 67 also of a plastics material is generally similar to hub 47 except that the bore is closed at one end by a wall 68 apertured at 69, 70 to allow the insertion of a tool by means of which the hooks on two of the fingers of the hub can be released from engagement with the slots on the boss. There is also a diametral slot 71 which gives access to the other two fingers.

The wheel 3 is identical with the wheel 2 but does not, of course, carry a guide.

Press fitted on that end of the armature shaft 42 adjacent fan 44 is the boss 72 of a carrier 73 of a plastics material forming part of the assembly 6, and on which cutting fingers 74, also of a plastics material, are pivotally mounted by means of metal fasteners 75. Each finger has an enlarged head formed with interconnecting circular holes 76, 77. Hole 77 is large enough to allow the head 78 of a fastener to pass through but hole 76 is not. The interconnection between the holes 76, 77 is large enough to allow passage of the shaft of the fastener 75. Thus, to secure a finger 74 to the carrier, the head of the fastener 75 is first passed through hole 77. The finger 74 is then moved to allow the shaft of the fastener 75 to pass from hole 77 to hole 76 which being smaller than the head of the fastener 75 allows the latter to secure the finger 74 to the carrier.

The guard 4 is detachably secured to the housing 1 by means of the flanges 49, 50 and 51 referred to above. The guard 4 is made of a molded plastics material.

Fig. 9 shows the guard 4 in elevation looking on to the wall 78 that bounds on side of the compartment 5 referred to above. The wall has a central hole 79 with three equi-sized sector-shaped projections 80 spaced round its periphery. Adjacent one of the projections 80, the wall 78 has a circular hole 81.

The projections 80 are sized to allow them to be aligned, when the guard 4 is offered up to the hub 47, with the main portions of the flanges 49, 50, 51 and then engaged behind the subsidiary portions of those flanges by rotating the guard slightly on the hub 47. The arrangement resembles that of a 'keyway'. When the guard is offered up to the hub 47, resilient finger 55 is depressed downward as seen in Fig. 7 by one of the projections 80 but as the guard is rotated as just described, the end of the finger clears the relevant segment and moves back into the position shown in Fig. 7 in which it prevents reverse rotation of the guard 4 which is thus locked in position. To remove the guard, a tool, for example a screwdriver, is inserted through the hole 81 into engagement with the finger 55 to depress the latter and allow the reverse rotation of the guard to bring the sector-shaped projections 80 into alignment with the main portions of the flanges 49, 50, 51 after which the guard can be removed.

After the guard has been removed, the cutter assembly 6 is exposed and can be removed by easing the boss 72 of the carrier 73 of the end of the armature shaft 42. Removal of screws 65 enables the guide 7 to be lifted away from the hub member 48. The open end of the hub member 48 is then exposed to permit release of the hooks 58 and removal of the hub member.

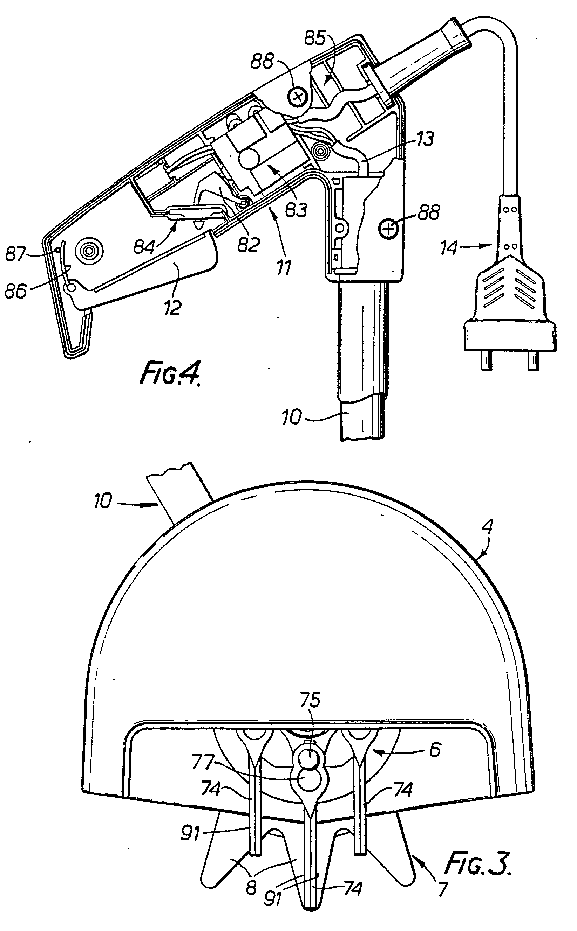

The motor of the motor unit 17 is a series wound d.c. motor whose operation is controlled by the user via lever 12 in the handle 4. Lever 12 is linked by a second lever 82 pivotally mounted within the handle 4 to a switch indicated diagrammatically at 83. Lever 82 operates through a splash-proof diaphragm 84. The drop lead of drop-lead connector 14 is held, at its end, by a serpentine cable grip 85. Lever 12 is biassed into an "OFF" position as shown in Fig. 4 by an integral leaf spring 86 that bears against a projection 87 in the handle.

The handle 4 is also of clam-shell construction the handle parts being held together by screws two of which are shown at 88.

In like manner, the parts of the housing 1 are held together by screws one of which is shown at 89. Clam-shell part 15 has internal bosses 90 for the reception of screws such as screw 89.

When energised, the motor rotates the carrier 73 and the cutting fingers are swung out into radial positions as shown in Fig. 1 by centrifugal force. Each finger is formed with two bevelled cutting edges 91 along its length. Fan 44 draws in cooling air via inlets (not shown) in the housing 1 adjacent wheel 3, such air flowing over the motor unit 17 to cool the latter and being discharged via holes 92 in an annular groove 93 in the housing 1. This route for the cooling air minimises the risk of grass cuttings and/or other extraneous material being drawn into the housing 1.

To use the embodiment as a lawn edger, and having made connection to a power source, the user aligns the guide 7 with the edge of the lawn and in contact with the edge. The motor is then energised by depressing lever 12 and the rapid rotation of the cutting fingers cuts grass projecting between the fingers 8 of the guard and so trims the lawn edge. The user simply pushes the edger along the edge of the lawn, such movement being made easily by rotation of the wheels 2, 3 which roll along the surface of the lawn.

Access to the cutting fingers and guide for cleaning purposes is provided by removing the guard 4 as described above, the user first having ensured that the edger has been disconnected from the power source.

## Claims

1. A lawn edger comprising a housing (1) accommodating a drive motor for rotating a cutter positioned at one end of the housing, the housing being adapted, at each end, to provide a mounting (46, 66) for a hub member (47, 67) which rotatably mounts a ground wheel on the housing with the help of retaining means (57, 58), which releasably engage the associated mounting (46, 66) to detachably secure the hub member to the mounting, characterized in that: the housing (1) is of clam shell construction; the clam shell parts (15) are so shaped that, at each end of the housing, the parts together form the mounting (46, 66) for the hub member (47, 67); and each hub member (47, 67) is formed with the retaining means (57, 58).

2. A lawn edger as claimed in claim 1 and in which the retaining means (57, 58) comprise at least one hooked tongue, the mounting (46, 66) having slots for the reception of the hooked tongue (58) when the hub member (47, 67) is located on the mounting.

3. A lawn edger as claimed in claim 2, in which the hub member (47, 67) is adapted to provide access (69, 70) to the hooked tongue (58) for the purpose of releasing the latter from engagement with the slots.

4. A lawn edger as claimed in any one of the preceding claims, in which each hub member (47, 67) supports a ground engaging tyre (2, 3).

5. A lawn edger as claimed in any one of the preceding claims in which that one (47) of the hub members at said one end includes means (49, 50, 51) for receiving and supporting a guard (4) for the cutter (6).

6. A lawn edger as claimed in claim 5, in which the one hub member (47) comprises a cylindrical wall portion (48) on which the ground wheel (2) is rotatably mounted, the wall portion having circumferentially-spaced flanges (49, 50, 51) for receiving the guard (4).

7. A lawn edger as claimed in claim 6, in which one (50) of the flanges has a resilient tongue portion (55) adapted to retain the guard (4) once positioned in a guarding position on the hub member (47).

8. A lawn edger as claimed in claim 7, in which the guard (4) has an opening (81) for giving access to the resilient tongue (55) through which the insertion of a tool enables the tongue to be displaced and permit removal of the guard from the hub member (47).

9. A lawn edger as claimed in any one of the preceding claims, in which the housing (1) is secured to one end of a shaft (10) whose other end carries a handle (11) by means of which the edger is guided.

**Patentansprüche**

1. Rasenkantenschneider mit einem Gehäuse (1), das einen Antriebsmotor zur Drehung eines an einem Ende des Gehäuses angeordneten Schneidelementes aufweist, wobei das Gehäuse an jedem Ende geeignet ist, eine Befestigung (46, 66) für ein Nabenelement (47, 67) zu bilden, das mit Hilfe von Haltemitteln (57, 58), die in lösbarem Eingriff mit der zugehörigen Halterung (46, 96) zur lösbaren Befestigung des Nabenelementes stehen, an der Befestigung drehbar ein Bodenrad am Gehäuse haltert, dadurch gekennzeichnet, daß das Gehäuse (1) eine Schalenkonstruktion ist, daß die Schalenteile (15) so geformt sind, daß sie an jedem Ende des Gehäuses zusammen die Befestigung (46, 66) für das Nabenelement (47, 67) bilden, und daß jedes Nabenelement (47, 67) mit dem Haltemittel (57, 58) ausgebildet ist.

2. Rasenkantenschneider nach Anspruch 1, in dem die Haltemittel (57, 58) mindestens eine hakenförmige Zunge aufweisen, wobei die Befestigung (46, 66) Schlitze zur Aufnahme der hakenförmigen Zunge (58) bei auf der Befestigung angeordnetem Nabenelement (47, 67) aufweisen.

3. Rasenkantenschneider nach Anspruch 2, bei dem das Nabenelement (47, 67) ausgebildet ist, einen Zugang (69, 70) zur hakenförmigen Zunge (58) zu bilden, um letztere aus dem Eingriff mit den Schlitzen zu lösen.

4. Rasenkantenschneider nach einem der vorhergehenden Ansprüche, bei dem jedes Nabenelement (47, 67) ein in Eingriff mit dem Boden kommendes Rad (2, 3) trägt.

5. Rasenkantenschneider nach einem der vorhergehenden Ansprüche, bei dem eines (47) der Nabenelemente an dem einen Ende Mittel (49, 50, 51) zur Aufnahme und Halterung einer Schutzhaube (4) für das Schneidelement (6) aufweist.

6. Rasenkantenschneider nach Anspruch 5, bei dem ein Nabenelement (47) einen zylindrischen Wandabschnitt (48) hat, auf dem das Rad (2) drehbar befestigt ist und der in Umfangsrichtung im Abstand angeordnete Flansche (49, 50, 51) zur Aufnahme der Schutzhaube (4) aufweist.

7. Rasenkantenschneider nach Anspruch 6, bei dem einer der Flansche (50) einen elastischen Zungenbereich (55) zur Halterung der Schutzhaube (4), wenn diese in einer Schutzstellung auf dem Nabenelement (47) positioniert ist, aufweist.

8. Rasenkantenschneider nach Anspruch 7, bei dem die Schutzhaube (4) eine Öffnung (81) für den Zugang zur elastischen Zunge (55) aufweist, durch den durch Einführen eines Werkzeugs die Zunge verlagert und die Schutzhaube vom Nabenelement (47) entfernt werden kann.

9. Rasenkantenschneider nach einem der vorhergehenden Ansprüche, bei dem das Gehäuse (1) auf einem Ende eines Schaftes (10) befestigt ist, dessen anderes Ende einen Griff (11) trägt, mit dessen Hilfe der Schneider geführt wird.

**Revendications**

1. Tondeuse pour bordures de pelouses comprenant un carter (1) qui renferme un moteur d'entraînement destiné à entraîner un organe de coupe positionné à une extrémité du carter, le carter étant adapté pour constituer à chacune de ses extrémités, un support de montage (46, 66) pour un élément moyeu (47, 67) par lequel une roue de roulement au sol est montée rotative sur le carter, à l'aide de moyens de retenue (57, 58) qui coopèrent de façon démontable avec le support de montage correspondant (46, 66) pour fixer l'élément moyeu au support de montage de façon démontable, caractérisée en ce que: le carter (1) est d'une construction en deux demi-coques, les demi-coques (15) étant conformées de telle manière qu'à chaque extrémité du carter, elles forment ensemble le support de montage (46, 66) de l'élément moyeu (47, 67); et en ce que chaque élément moyeu (47, 67) est formé avec les moyens de retenue (57, 58).

2. Tondeuse pour bordures de pelouses selon la revendication 1 et dans laquelle les moyens de retenue (57, 58) comprennent au moins une languette recourbée en crochet, le support de montage (46, 66) présentent des fentes destinées à recevoir la languette (58) recourbée en crochet lorsque l'élément moyeu (47, 67) est monté sur le support de montage.

3. Tondeuse pour bordures de pelouses selon la revendication 2, dans laquelle l'élément moyeu (47, 67) est adapté pour former une voie d'accès (69, 70) à la languette (58) recourbée en crochet, afin de permettre de libérer cette languette de sa prise avec les fentes.

4. Tondeuse pour bordures de pelouses selon une quelconque des revendications précédentes, dans laquelle chaque élément moyeu (47, 67) supporte un bandage de roulement au sol (2, 3).

5. Tondeuse pour bordures de pelouses selon une quelconque des revendications précédentes, dans laquelle celui (47) des éléments moyeux qui est situé à ladite extrémité comprend des moyens (49, 50, 51) destinés à recevoir et à supporter un carter de protection (4) pour la lame (6).

6. Tondeuse pour bordures de pelouses selon la revendication 5, dans laquelle l'élément moyeu (47) comprend une partie de paroi cylindrique (48) sur laquelle la roue de roulement au sol (2) est montée rotative, la partie de paroi présentant des ailes (49, 50, 51) espacées circonférentiellement, destinées à recevoir le carter de protection (4).

7. Tondeuse pour bordures de pelouses selon la revendication 6, dans laquelle une (50) des ailes présente une partie languette élastique (55) adaptée pour retenir le carter de protection (4) lorsqu'il a été positionné dans une position de protection sur l'élément moyeu (47).

8. Tondeuse pour bordures de pelouses selon la revendication 7, dans laquelle le carter de protection (4) présente une ouverture (81) destinée à permettre d'accéder à la languette élastique (55), et à travers laquelle l'insertion d'un outil permet d'écarter la languette et de séparer le carter de protection de l'élément moyeu (47).

9. Tondeuse pour bordures de pelouses selon une quelconque des revendications précédentes, dans laquelle le corps (1) est fixé à une extrémité d'un manche (10) dont l'autre extrémité porte une poignée (11) à l'aide de laquelle on guide la tondeuse à bordures.

FIG.2.

FIG.1.

Fig.4.

Fig.3.

Fig.5.

Fig.6.

Fig.7.

Fig.8.

Fig.9.

Fig.10.